# EUROPEAN PATENT APPLICATION

(11) **EP 1 818 930 A1**
(43) Date of publication of application: **15.08.2007**
(21) Application number: 07380029.4
(22) Date of filing: 09.02.2007
(51) Int. Cl.: G11B 27/031, G11B 27/10, G11B 27/11, G11B 27/34, G06F 17/30, H04L 29/06, H04N 7/173

(54) **System and method for the intelligent management, recommendation and discovery of multimedia contents for mobile playback devices**

(30) Priority: 10.02.2006 GB 0602764
(71) Applicant: Vodafone Group PLC, Newbury Berkshire RG14 2FN (GB); Vodafone Espana, S.A., 28108 Alcobendas, Madrid (ES)
(72) Inventor: Caudevilla Laliena, Guillermo, 22003 Huesca (ES); Del Ser Bartolome, David, 28005 Madrid (ES)
(74) Representative: Carvajal y Urquijo, Isabel

(57) **Abstract**

The invention relates to a system and method for the intelligent management of multimedia contents for mobile playback devices. The system comprises a graphical user interface (10), a module catalogue manager module (20) in charge of directing and coordinating the remaining modules of the system, a multimedia player (30) in charge of playing the multimedia contents stored in local content (150) or in a remote catalogue (200), a module metadata manager module (60) accessing the content broker database (80) containing information relating to the multimedia contents and playlists stored in the mobile device (1) and a recommender engine client module (70) in charge of obtaining multimedia content recommendations from a recommender engine (90) according to a playlist, a tag or a specific multimedia content. The user can intelligently create music sessions obtaining tailored playlists means of the present invention.

## Description

### Field of the Invention

The present invention relates to a management system for processing multimedia content playlists. In particular, the tool processes content playlists for use on mobile playback devices, such as mobile telephone terminals or personal digital assistants (PDAs). The present invention can not only be applied to songs but to any type of multimedia content such as musical videos.

### Background of the Invention

In the field of music storage and playback devices, the term playlist has come to indicate a file format suitable for interpretation by multimedia player software programs, thereby facilitating the organization and control of the playback of music and other content items delivered by such devices. Such playlists may be defined, stored, and selected to instruct a playback device to reproduce content items either in listed sequence or, if a random playlist function is selected, in a random order. Thus in the mp3 standard, for example, playlists (conventionally, in the form of text files with the suffix ".m3u") list the server/direvtory path to one or more content files.

One open standard that extends this concept is the so called XSPF standard. XSPF (XML Shareable Playlist Format) is an open non-proprietary specification of an XML vocabulary for playlists. XSPF is both flexible and extensible - allowing playlists to represent other information besides server/directory paths in a systematic manner. Very few elements are mandatory and there are several overlapping facilities for adding additional information not explicitly accounted for in the XSPF specification.

Several terms are used throughout this specification that are defined below:
- Playlist: ordered group of multimedia contents stored locally or non-locally and arranged to be played. A playlist is modeled using XSPF files. Playlists store the metadata of a particular multimedia content (for example, artist, album and title for a song), as well as the unique identifier of said content in the remote catalogue and the path for the access to said file (either a path to a local resource or to the remote catalogue). All these data are used to play multimedia contents both locally and remotely.
- "Session": ordered group of multimedia contents, stored locally or non-locally which is played in a mobile device and which is the result of the combination of a playlist stored in the mobile device with recommended multimedia contents. The recommended multimedia contents can be recommended according to a playlist or a user tag. A session exists from the moment in which in which it is started to be played until its ending, it is not stored in the mobile device , the XSPF would be used to do so and it would become a playlist.
- "Tag": Mark conferred by a user to a multimedia content for the purpose of classifying it according to his/her personal taste. They are used to create sessions without needing to have a playlist as an origin. In other words, a user can create a session from a "party" tag, which session will contain multimedia contents that other users have classified as "party".
- "Multimedia content": song or musical video which is played in the multimedia playback mobile device.

It is known to provide a mobile service through which channels of music and/or video content items are streamed. Using such service, it is possible for the user to give manual feedback on any content item streamed to him: he may for example be given the opportunity to "mark" a piece of music content out of ten as a measure of his own personal enjoyment of the multimedia content. On many occasions such explicit polling for information may be inconvenient or impossible, and any deduction that depends upon accurate polling of preferences will be distorted as a consequence. The feedback from the user may be gathered and processed into a preference profile. The user preference profile may then be used to alter the likelihood that a particular content item is presented in media streams presented to the user (favored tracks being weighted higher than disliked tracks and therefore being presented more frequently)-Alternatively, the preference profile may be used to alter the content items listed in a generated, user-specific playlist.

Therefore, once the mobile devices (telephones, PDAs, etc) are currently being converted to multimedia content players, the users can choose between playing content stored locally in the mobile device or stored remotely for example in a catalogue belonging to a server or another similar source. There are currently systems allowing to choose between one option or the other, but they do not allow an intelligent mixture thereof. The present invention coordinates the two different content sources to create a better experience for the user. The present invention provides the user with tailored recommendations and increases the exposure to new content adapting to his/her tastes.

It is known that abbreviations and acronyms are frequently used in the field of computers. A glossary of acronyms/terms used throughout this specification is set forth below:
- HTML: HyperText Markup Language,
- MMS: Multimedia Message System,
- MSISDN: Mobile Subscriber Integrated Services Digital Number
- SMIL: Synchronized Multimedia Integration Language,
- URI: Universal Resource Identifier,
- URL: Universal Resource Locator
- XML: extensible Markup Language,
- XSLT: extensible Stylesheet Language Transformations,

### Description of the Invention

The invention relates to a system for the intelligent administration, recommendation and discovery of multimedia content for mobile playback devices according to claim 1 and to a method according to claim 6. It also refers to a system for influencing the generation of a tailored playlist recommendation according to claim 10. Preferred embodiments of the system and of the method are defined in the dependent claims.

The system comprises, inside the mobile playback device:
- a graphical user interface, through which the user of the mobile playback device can request at least one of the following actions: acquiring multimedia content recommendations for a specific multimedia content, and intelligently creating music sessions obtaining tailored playlists;
- a catalogue manager module, in charge of directing and coordinating the remaining modules of the system;
- a multimedia player, controlled from the graphical user interface and in charge of playing the multimedia contents, since the latter are stored in the mobile device in local content or stored outside the mobile device in a remote catalogue;
- a metadata manager module which accesses a content broker database at the request of the catalogue manager, which database contains information relating to the metadata of the multimedia contents and playlists stored the mobile device;
- a client module of the recommender engine, in charge of:
   - requesting multimedia content recommendations from a recommender engine outside the mobile device, according to at least one of the following elements provided by the catalogue manager:

   - a playlist,
   - a tag,
   - metadata of a specific multimedia content;
- receiving said recommendations and sending them to the catalogue manager.

The recommendations sent by the recommender engine can have a playlist format for example, in which case the catalogue manager is in charge of extracting the metadata of the multimedia contents of said playlist. For the creation of tailored playlists, the catalogue manager can for example combine the multimedia contents recommended by the recommender engine with the multimedia contents of the current playlist of the mobile device, or said combination can have been previously done by the recommender engine.

The system can additionally comprise, inside the mobile reproduction device:
- a web browser for accessing the complementary information contained in a web server and relating to the multimedia contents.
- a playlist exchange manager module, controlled by catalogue manager and in charge of:
   - detecting the entry of data massages containing playlists in the mobile, extracting said playlists and sending them to the catalogue manager;
   - sending the playlists indicated by the user to other devices through data messages;

The present invention also includes a method for the intelligent administration of multimedia contents for mobile playback devices, through which a tailored playlist for the user is obtained and the multimedia contents of which can be played in said mobile device. The method comprises the following steps:
a- selecting at least one of the following elements in the mobile reproduction device:
   - a playlist,
   - a tag,
   - metadata of a specific multimedia content;
b- requesting, by the mobile device, multimedia content recommendations from a recommender engine outside the mobile device, sending with said request the at least one of the elements selected in step a), the recommendations being carried out according to said at least one sent element;
c- receiving, by the mobile device, said multimedia content recommendations, which have a playlist format for example;
d- obtaining a tailored playlist, for which the mobile device can, for example, combine the multimedia contents recommended by the recommender engine with the multimedia contents of the current playlist of the mobile device;
e- playing the tailored playlist in the mobile device, checking for each multimedia content to be played if the latter is stored locally in the mobile device:
   - if this is the case, playing said multimedia content by locally accessing the multimedia content;
   - otherwise, playing said multimedia content by accessing the remote catalogue outside the mobile device.

The present invention also refers to a system for influencing the generation of a tailored playlist recommendation. The system includes:
- a playback engine, which is arranged to playback at least one content item from a number of sources;
- a recommender engine for generating a core playlist recommendation; and
- a management engine for processing the core playlist recommendation in accordance with additional, aggregated information, thereby generating the tailored playlist recommendation.

The management engine can further trigger the generation of the core playlist recommendation in the recommender engine.

The recommender engine can additionally generate a playlist suggestion from a seed list of content items

### Brief Description of the Drawings

A set of drawings is very briefly described below which aid in better understanding the invention and which are expressly related to an embodiment of said invention which is set forth as a non-limiting example thereof.

Figure 1 shows a functional architecture of the elements of a playlist generation application in accordance with the present invention.

Figure 2 shows a flow diagram of tasks involved when the recommender service provides dynamic recommendations during the playback of a content item.

Figure 3 shows a flow diagram of tasks involved when the recommender service selects a predefined playlist and inserts suitable recommendations.

Figures 4 and 5 show flow diagrams of tasks involved when the user respectively sends or receives a playlist to and from another user.

Figure 6 shows the actions carried out by the system to play a playlist, accessing the multimedia content either locally or through a remote catalogue.

Figures 7 and 8 respectively show flow diagrams of tasks involved when the user tags a multimedia content being played and when the user creates a session from a tag selected from a group of them, provided by the system according to a user criterion.

### Description of a Preferred Embodiment of the Invention

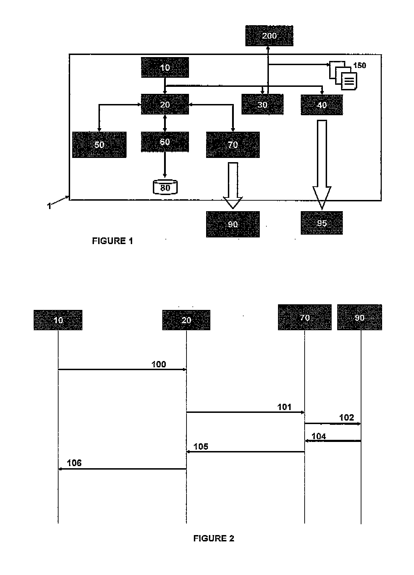

Figure 1 shows the elements of the system for the administration of multimedia contents for a mobile reproduction device 1, object of the invention. It comprises the following modules:
- Graphical user interface 10 : This module forms the graphical interface that is available to the user for interacting with the invention, i.e. for intelligently creating music sessions from locally stored playlists or from tags. The graphical interface is also used to send playlists to other contacts and it is the graphical environment itself which notifies the user of the arrival of a playlist sent by another user.
- Catalogue manager 20: This module is the brain controlling the operation of the entire invention. Its main function consists of directing the remaining modules when the creation of new multimedia session (either from a playlist or a tag) is required from the graphical interface. It is also in charge of initializing the playlist exchange manager module 50, the main task of which is to detect the entry in the mobile device 1 of multimedia messages containing playlists in order to store them. The catalogue manager 20 is further in charge of sending playlists to other contacts.
- Multimedia player 30: Module providing the system with the capacity to play, pause, fast forward, rewind and skip to the next item in a session at a given time. It communicates directly with the graphical user interface using the controls that the latter has to control the playback of multimedia contents. Facility may also be provided for adding a recommended multimedia content to the playlist as it is played; updating and saving the playlist dynamically; downloading artist/album/track information; viewing the listening history of another member; viewing the playlists of other members; finding new members who share tastes; and/or viewing personalized recommendations for artists, albums, and multimedia contents.
- Web browser 40: Web browser of the mobile device 1 which is executed once the user clicks on a multimedia content, an album or an artist in the user interface. Said web browser is used to show the information relating to the selected epigraph through a website adapted to the mobile device.
- Playlist exchange manager 50: Module initialized by the catalogue manager 20 once the mobile device 1 is turned on. It has two clear purposes, Firstly, to discriminate the entering MMS messages in a transparent manner for the user, for the purpose of detecting those containing playlists sent by another user, to extract said playlist and send it to the catalogue manager 20 for its storage. And secondly, providing the catalogue manager 20 with a way to send playlists to other users through MMS messages.
- Metadata manager 60: Module providing the catalogue manager 20 with access to the metadata of the multimedia content and playlists stored in the mobile device 1 (unique identifiers of multimedia contents and lists, artists, albums, etc.). This module allows the catalogue manager 20 to know if a recommended multimedia content already exists in the mobile device and must be reproduced locally or otherwise, remotely from a server in the web.
- Recommender engine client 70: This module is in charge of collecting the recommendations that the recommender engine 90 delivers according to a playlist or a tag provided by the catalogue manager 20. To that end, it uses the web service interface shown by the recommender engine 90 in the web. The collected recommendations follow the playlist format (XSPF), therefore the catalogue manager 20 will be in charge of extracting the data of the multimedia contents, checking of the recommended multimedia contents form part of the local catalogue or if they must be reproduced from a web address, combining said recommendations with the original playlist, if there is one, and requesting the graphical user interface 10 to show the information of the created session.
- Content broker database 80: Module containing all the information relating to all the playlists stored in the mobile device together with the metadata defining each of the multimedia contents that are also available.
- Recommender engine 90: Web module outside the mobile device 1 that is used by the latter to obtain intelligent recommendations based on data of the user community of the system. The recommender engine can serve recommendations according to a specific playback or a tag. It also has other services allowing the catalogue manager 20 to, for example, obtain the unique identifier of a multimedia content for which it only has metadata relating to title, album or artist. The core recommendations of the recommender engine can be altered to take account of measurable factors that might be of importance to the user. In particular, the aggregated information is an aggregation of the recommendations of other users: the tailored playlist will therefore reflect the implicit and explicit likes or dislikes of other users (either those of specific groups of users or those of all users of the service).
- Web server 95: Module outside the mobile device 1 providing the user of the invention with access to one or several websites with information of the music being played, by just clicking on the title, album or artist of the multimedia contents forming the ongoing session.
- Local content 150: Group of multimedia content files stored in the file system of the mobile device 1.

In a preferred embodiment of the invention, an XML format is used to represent playlists, a suitable example being the XSP format. An XSPF document can include a vast amount of information about each multimedia contenttrack and the playlist itself. While clearly a useful feature of the vocabulary, this also means that two XSPF documents may be quite different from each other, even if they are trying to capture similar attributes, by virtue of extending the schema in different ways.

Conveniently, there are already XSLT transforms for converting XSPF into familiar formats such as HTML, m3u, and SMIL and many of the standardized elements in XSPF are suitable for use in both PC-based and mobile terminal environments. Furthermore, the digital music community is increasingly adopting the XSPF format: XSPF is the native format for the Yahoo! Music Engine, as well as an exportable format for playlists from the Webjay community playlist site [see http://www.webjay.org].

The XSPF specification provides three elements for extending the XSPF vocabulary: <link>, <extension> and <meta>. These can be used at the level of playlist and/or multimedia contenttrack.

The <link> element allows adding meta information that can be verified to be a valid URI. The <meta> element allows adding meta information whose value is simple string content. Finally, the <extension> element allows including an arbitrary XML fragment within an XSPF document. (Note that the <meta> element does not allow nested XML.)

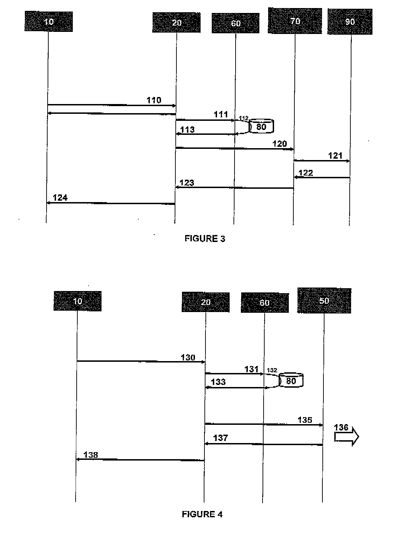

Figure 2 shows the process for acquiring recommendations based on the multimedia content being played. It specifically shows a flow diagram of the tasks involved when the recommender service provides dynamic recommendations during playback of a multimedia content item. These recommendations that are based on the multimedia content being played are shown to the user during playback, such that he/she can decide at a given time to play any of the multimedia contents that the system is proposing to be discovered, or ignore all of them. The process is the following: whenever a multimedia item within a session starts to be automatically played, the system requests 100 dynamic recommendations based on the multimedia content which is being played; the catalogue manager 20 receives the request from the user to play a multimedia content (either local or remote) and initializes, automatically and in a transparent manner for the user; a process for collecting recommendations for that content in particular, such that it directly sends 101 the identifier of said multimedia content so that the recommender engine client 70 consults 102 the recommender engine 90. The recommender engine 90 sends back 104 a playlist with the recommended contents in this case, the recommender engine client 70 resends it 105 to the catalogue manager 20 updating 106 the graphical user interface 10, showing to the user the different recommended contents in order for him/her to choose, if he/she wants, those he/she likes most to be played.

Figure 3 shows a flow diagram for the intelligent creation of a session, showing the tasks involved when the multimedia content recommender service selects a predefined playlist and inserts suitable recommendations. In this case, the system object of the invention must create a session uniting the chosen playlist with the suitable recommendations in that case from a playlist chosen by the user through the graphical interface 10. Said session will be played sequentially. The process for the intelligent creation of the session is the following:
- The user, through the graphical user interface 10, selects a playlist on which to base the creation of the session to be played, sending 110 the unique identifier of said list to the catalogue manager 20 At this point, the catalogue manager 20 uses the unique identifier of the chosen playlist to obtain the data of the multimedia contents forming it. The catalogue manager sends 111 the unique identifier of the playlist to the metadata manager 60, said metadata manager 60 then consulting 112 the content broker database 80, and returning 113 the data of the multimedia contents forming the playlist to the catalogue manager 20. Once the catalogue manager 20 has these data, it sends 120 the data of the playlist to the recommender engine client 70, requesting it to consult 121 the recommender engine 90 using the content of the chosen playlist as a search criterion. As in the previous case, the recommender engine 90 returns 122 a playlist of recommended multimedia contents, which list will be resent 123 by the recommender engine client 70 to the catalogue manager 20, which will integrate said playlist of recommended multimedia contents with the original playlist, forming the definitive session that it will send 124 to the user interface 10 so that the latter can show to the user the list of the contents forming the session which will be played.

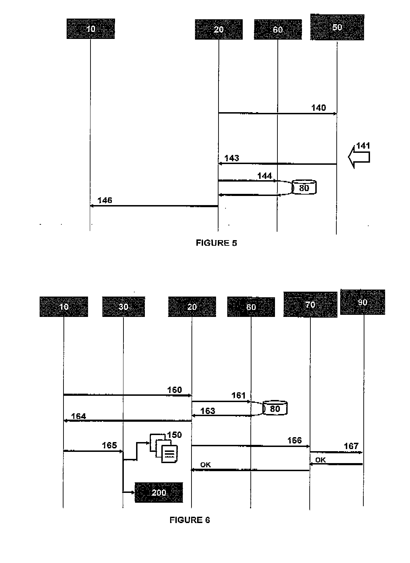

Figures 4 and 5 shows the flow diagrams of the tasks involved when the user respectively sends and receives a playlist to and from another user. In the sending of the playlist, shown in Figure 4, once the user has selected a playlist to be sent and a destination telephone number (his/her MSISDN) through the graphical interface 10, the interface 10 sends a request for sending the playlist 130 to the catalogue manager 20, said request including the identifier of the playlist and the MSISDN of the addressee. The catalogue manager sends 131 the unique identifier of the playlist 131 to the metadata manager 60, said metadata manager 60 then consulting the content broker database 80, and returning 133 the data of the multimedia contents forming the playlist to the catalogue manager 20. In this way, the catalogue manager 20 has obtained the XSPF file modeling the playlist. Then, the catalogue manager 20 requests 135 the playlist exchange manager 50 to generate an MMS with the XML as attached data and to send it 136 to the addressee MSISDN. The playlist exchange manager 50 can optionally indicate 137 the correct sending of the MMS to the catalogue manager 20, the catalogue manager 20 in turn communicating 138 it in turn to the graphical interface 10 so that the latter shows it on screen to the user.

The reception of playlists follows a similar process, as shown in Figure 5. Once the mobile device is turned on, the catalogue manager module 20 invokes 140 the playlist exchange manager 50 so that the latter starts listening to all the entering MMS. From this moment onwards, any time it detects 141 an MMS containing a playlist in the suitable format, it will carry out the following tasks: silencing the arrival of said MMS such that it is not noticed by the user, extracting the attached data and sending 143 them to the catalogue manager 20 for their storage 144, through the metadata manager 60 and in the content broker database 80. Therefore, the next time the user uses his/her graphical user interface 10 the catalogue manager 20 will notify 146 the availability of a new playlist. At the time of storing the playlist the metadata manager 60 checks of the identifiers of the multimedia contents included in the playlist coincide with the identifiers in the locally available contents. Thus, the URLs from which to access each of the contents are updated.

Figure 6 shows the tasks carried out when a playlist is played, either created locally or received from ant other user.

The multimedia player plays multimedia contents based on URLs provided by the catalogue manager 20 through the user interface 10: said URLs can relate to local content (file://) or to remote content (http://), but it makes no difference for the multimedia player 30. The casuistry while playing a playlist is variable and depends on its nature and origin. Namely:
- A playlist can be created locally from a local content local 150 stored in the mobile device 1; in this case only the metadata of the multimedia contents (for a song:, artist, album and title) is available a priori, as well as the local path which allows accessing the content in the mobile device 1. This information is enough for playing the multimedia content in the device 1;, but not enough for obtaining recommendations based on the content of the playlist because a unique identifier identifying each of the multimedia contents in the remote catalogue 200 must be obtained previously. This unique identifier is obtained by consulting the recommender engine 890 using the metadata (artist, album, title) at the time of creating the playlist. The unique identifier of each multimedia content is sent to the recommender engine 90 to obtain recommendations both for a single unique content (according to Figure 2), and for a complete playlist (according to Figure 3). Together with the unique identifier, , The recommender engine sends the URL along with the unique identifier, which allows remotely accessing the content in the event that it is not available stored locally in the mobile device 1.
- A playlist can be received from another user of the system (as described in Figure 5), in which case all the necessary data will be available, i.e., apart from the metadata, the unique identifiers of the multimedia contents and the URLs giving remote access through the network.

When the playlist is created in the device, it is checked if the local content coincides with the content of the playlist, such that the catalogue manager 20 knows when it must be connected to a remote URL to play the content or when it is enough to play a content locally..

The playback process described in Figure 6 is the following: The user selects a playlist from those available from user interface, the catalogue manager 20 therefore receives 160 the identifier of the playlist it must open and invokes the metadata manager 60 so that the latter checks if the unique identifiers of the contents of the playlists coincide with the identifiers of the local contents, suitably updates the URLs and provides 163 the catalogue manager 20 with suitable metadata so that it sends 164 them to the user interface 10 and thus the latter can show them to the user and invokes 165 the multimedia player 30 with the suitable URL. At the time in which the multimedia content is played, the catalogue manager 20 invokes 166 the recommender engine client 70 so that the latter notifies 167 the recommender engine 90 that the content with a unique identifier has been played, such that the recommender engine 90 is fed back with information on the tastes of the users.

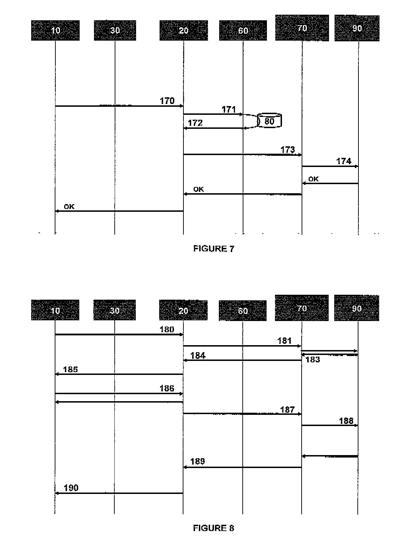

Figure 7 shows the tasks that are carried out when the user decides to tag a multimedia content which is being played. The user interface 10 collects the tag that the user wants to introduce in the system, for example, "party in Huesca", and the data that the multimedia content has. The catalogue manager 20 receives 170 the tag and said data and obtains 172, after a request 171 to the metadata manager 60, the unique identifier of said multimedia content and sends 173 both data to the recommender engine client 70 so that the latter resends 174 it to the recommender engine 90. From this time onwards, a new tag is registered in the system associated to this multimedia content.

Figure 8 shows how to create a multimedia session through tags. To that end, the user introduces 180 a tag search criterion of the system, for example "party" through the user interface 10. The catalogue manager 20 resends 181 the search criterion to the recommender engine client 70, which in turn collects 183 a list of tags of the system complying with the criterion introduced by the user from the recommender engine 90. Said list passes 184 from the recommender engine client 70 to the catalogue manager 20 to finally reach 185 the user interface 10 showing it to the user. The returned list could be for example "party in Huesca", "party", "party in Madrid", etc. At this time, the user selects one and the catalogue manager 20 receiving the tag through the user interface 10 requests 187 the recommender engine client 70 to provide it with a suitable playlist for said tag. The recommender engine client 70 requests 188 it from the recommender engine 90 and sends 189 it back to the catalogue manager 20 so that the latter provides 190 it to the graphical user interface and the session starts.

The preferred embodiment of the present invention requires a number of extensions to provide additional information processed by the recommender engine 90, including extensions representing: track year; genre; Track/Artist/Album/User links to an appropriate content broker website; unique content item identifiers; and/or User and Community Tags (whereby a user's/community of user's' rating of a content item can be expressed).

It is possible to operate the recommender engine 90 to recommend either whole "albums" of content items or individual content items.

The album recommendation service returns a list of recommended albums based on a given list of albums. Each album is identified either by a unique album identifier or a duple of name strings: artist|album. Fuzzy matching is performed to resolve any given name couple to the best matching albums in a content broker database 80.

Likewise the track recommendation service returns a list of recommended multimedia contents based on a given list of tracks. Each track is identified either by a unique track identifier, or by a triplet of name strings: artist|album|title. Again fuzzy matching is performed to resolve any given name triplets to the best matching tracks in the content broker database 80.

The resulting experience is akin to a personalized radio channel: the content delivered to the user takes account of explicit and inferred user preferences and is fully customizable to changes in user mood and tastes. So for example the user can customize his listening experience by selecting an artist, decade, tag, etc. The system also allows the user to create and listen to his own playlists, or those of a friend.

Personalized music recommendations form the core of this service. Based on an aggregation of each member's individual listening habits, recommendations are made for artists, albums and tracks that other members might be interested in. Just as in the operation of certain search engines, user community members can explicitly customize their recommendations to narrow the results to a specific decade, genre, and level of popularity. Using Web2.0 tools such as personal music journals, playlists, music "Discoveries", and photo & video galleries, members can share the new music they discover.

## Claims

1. A system for the intelligent management, recommendation and discovery of multimedia contents for mobile playback devices, **characterized in that** it comprises, inside the mobile playback device (1):
- a graphical user interface (10) through which the user of the mobile playback device (1) can request at least one of the following actions:
- acquiring multimedia content recommendations for a specific multimedia content,
- creating intelligent music sessions obtaining tailored playlists;
- a catalogue manager module (20) in charge of directing and coordinating the remaining modules of the system;
- a multimedia player (30) controlled from the graphical user interface (10) and in charge of playing the multimedia contents, since these are storied in the mobile device (1) in local content (150) or stored outside the mobile device (1) in a remote catalogue (200);
- a metadata manager module (60) which at the request of the catalogue manager (20) accesses the content broker database (80) containing information relating to the metadata of the multimedia contents and playlists stored in the mobile device (1);
- a recommender engine client module (70), in charge of:
- requesting multimedia content recommendations from a recommender engine (90) outside the mobile device (1), according to at least one of the following elements provided by the catalogue manager (20):
- a playlist,
- a tag,
- metadata of a specific multimedia content;
- receiving said recommendations and sending them to the catalogue manager (20).

2. A system according to claim 1, **characterized in that** it additionally comprises in the mobile playback device a web browser (40) for accessing the complementary information contained in a web sever (95) and relating to the multimedia contents.

3. A system according to any of the previous claims, **characterized in that** it additionally comprises in the mobile playback device (1) a module playlist exchange manager module (50), controlled by the catalogue manager (20) and in charge of:
- detecting the entry of data massages containing playlists in the mobile device (1), extracting said playlists and sending them to the catalogue manager (20);
- sending the playlists indicated by the user to other devices through data messages.

4. A system according to any of the previous claims, **characterized in that** the recommendations sent by the recommender engine (90) has playlist format and **in that** catalogue manager (20) is in charge of extracting the metadata of the multimedia contents of said playlist.

5. A system according to any of the previous claims, **characterized in that** for the creation of tailored playlists, the catalogue manager (20) combines the multimedia contents recommended by the recommender engine (90) with the tracks multimedia contents of the current playlist of the mobile device (1).

6. A method for the intelligent management, recommendation and discovery of multimedia contents for mobile playback devices, through which a tailored playlist for the user is obtained and the multimedia contents of which can be played in said mobile device (1), **characterized in that** it comprises the following steps:
a- selecting at least one of the following elements in the mobile playback device (1):
- a playlist,
- a tag,
- metadata of a specific multimedia content;
b- requesting, by the mobile device (1), multimedia content recommendations from the recommender engine (90) outside the mobile device (1), sending with said request the at least one of the elements selected in step a), the recommendations being carried out according to said at least one sent element;
c- receiving (104, 122), by the mobile device (1), said multimedia content recommendations, which have a playlist format for example;
d- obtaining a tailored playlist;
e- playing the tailored playlist in the mobile device (1), checking for each multimedia content to be played if the latter is stored locally in the mobile device (1):
- if this is the case, playing said multimedia content by locally accessing the multimedia content;
- otherwise, playing said multimedia content by accessing the a remote catalogue (200) outside the mobile device (1).

7. A method according to the previous claim, **characterized in that** the recommendations sent by the recommender engine (90) has a playlist format.

8. A method according to any of claims 6 to 7, **characterized in that** the mobile device (1) combines the multimedia contents recommended by the recommender engine (90) with the multimedia contents of the tracks of the current playlist of the mobile device (1) to obtain the tailored playlist in step d).

9. A system for influencing the generation of a tailored playlist recommendation, the system including:
- a playback engine, which is arranged to playback at least one content item from a number of sources;
- a recommender engine for generating a core playlist recommendation; and
- a management engine for processing the core playlist recommendation in accordance with additional, aggregated information, thereby generating the tailored playlist recommendation.

10. A system according to Claim 9, wherein the management engine further triggers the generation of the core playlist recommendation in the recommender engine.

11. A system according to Claim 10, wherein the recommender engine generates a playlist suggestion from a seed list of content items.
